# EUROPÄISCHE PATENTSCHRIFT

(11) **EP 2 988 067 B1**
(45) Veröffentlichungstag und Bekanntmachung des Hinweises auf die Patenterteilung: **24.10.2018**
(21) Anmeldenummer: 15177534.3
(22) Anmeldetag: 20.07.2015
(51) Int. Cl.: F23L 7/00, F23K 3/02, F23D 17/00, F23G 7/12, F23G 5/20, F23D 1/00

(54) **BEHEIZUNG EINES OFENRAUMS UNTER VERWENDUNG EINES MEHRSTOFFBRENNERS**
HEATING OF AN OVEN AREA USING A MULTIPLE FUEL BURNER
CHAUFFAGE D'UN FOUR A L'AIDE D'UN BRÛLEUR MULTI-COMBUSTIBLES

(30) Priorität: 21.08.2014 DE 102014012464
(43) Veröffentlichungstag der Anmeldung: 24.02.2016
(73) Patentinhaber: Messer Austria GmbH, 2352 Gumpoldskirchen (AT)
(72) Erfinder: Demuth, Martin, 2352 Gumpoldskirchen (AT)
(74) Vertreter: Münzel, Joachim R.

(56) Entgegenhaltungen:
- EP-A1- 2 626 659
- EP-A2- 2 014 981
- WO-A1-2012/054949
- DE-A1-102008 029 512
- DE-A1-102010 061 496
- DE-A1-102011 015 317

## Beschreibung

Die Erfindung betrifft ein Verfahren zum Beheizen eines Ofenraums, bei dem mittels eines Mehrstoffbrenners ein primärer Brennstoff und ein primäres Oxidationsmittel sowie wenigstens ein Sekundärbrennstoffstrom in einen Ofenraum eingetragen werden, wobei der Sekundärbrennstoffstrom pneumatisch durch ein Förderrohr des Mehrstoffbrenners geführt und im Bereich des dem Ofenraum zugewandten Brennermundes des Mehrstoffbrenners durch Einleiten eines in einen unteren Bereich des Förderrohrs eingetragenen Gasstroms abgelenkt wird. Mehrstoffbrenner kommen insbesondere in Drehrohröfen, beispielsweise in Drehrohröfen zur Zementherstellung oder zur thermischen Abfallverwertung, zum Einsatz und ermöglichen insbesondere die Verwendung von Brennstoffen unterschiedlichen Heizwerts bei der Verbrennung. Sie umfassen in der Regel mehrere Zuführungen für ein primäres Oxidationsmittel, einen ersten (oder "primären") Brennstoff sowie mindestens ein Förderrohr für mindestens einen weiteren Brennstoff ("Sekundärbrennstoff"), bei dem es sich nicht selten um einen niederkalorischen Brennstoffe bzw. Ersatzbrennstoff handelt. Die Zuführungen bzw. Förderrohre sind dabei als Ringkanäle ausgebildet und/oder verlaufen als parallel zueinander angeordnete Rohre durch den Brennerkörper hindurch. Ein derartiger Mehrstoffbrenner wird beispielsweise in der DE 10 2010 061 496 A1 beschrieben. Als primäres Oxidationsmittel kommt in der Regel Luft ("Primärluft") zum Einsatz. Ein sekundäres Oxidationsmittel ("Sekundärluft") wird über separate Zuführungen außerhalb des Brenners unmittelbar in den Ofenraum eingegeben. Als primärer Brennstoff wird meist ein hochkalorischer Brennstoff (mit einem Heizwert von mehr als 10 kWh/m³ bzw. 30 MJ/kg) oder ein Gemisch aus einem hochkalorischen Brennstoff wie Kohle, Öl oder Erdgas mit einem Ersatzbrennstoff verwendet.
Unter dem Begriff "niederkalorische Brennstoffe" werden Brennstoffe verstanden, die einen geringeren Heizwert als Erdgas besitzen. Beispiele für niederkalorische Brennstoffe sind gasförmige Brennstoffe mit einem Heizwert von weniger als 10 kWh/m³, wie beispielsweise Biogas, Stadtgas oder Grubengas, oder feste oder flüssige Brennstoffe mit einem Heizwert unter 30 MJ/kg. Unter dem Begriff "Ersatzbrennstoff" sollen hier sämtliche nicht-fossilen Brennstoffe, insbesondere aus Abfall gewonnene Brennstoffe, verstanden werden. Die Spanne der eingesetzten Ersatzbrennstoffe reicht von Lösemitteln, Reifen- und Altholzschnitzel, Klärschlamm, Spuckstoffen, Schreddermaterial aus der Kunststoffverarbeitung oder Tiermehl bis hin zur aufbereitetem Abfall aus Haushalten, Industrie- und Gewerbebetrieben, sowie nachwachsende Rohstoffe.

Aus betriebswirtschaftlichen Erwägungen geht der Trend in der Zementindustrie zu einem immer stärkeren Einsatz von niederkalorischen Brennstoffen bzw. Ersatzbrennstoffen. Ein erhöhter Anteil von Ersatzbrennstoffen im Primärbrennstoff, insbesondere bei Einsatz von Festbrennstoffen, führt jedoch zu Problemen mit dem Ofenbetrieb und der Klinkerqualität. Da Ersatzbrennstoffe, wie beispielsweise geschredderte Kunststoffe, aus technischen und betriebswirtschaftlichen Gründen nur bis Korngrößen von ca. 10 bis 20 mm Durchmesser aufbereitet werden, besitzen sie ein deutlich schlechteres Flug- und Ausbrandverhalten als beispielsweise eine fein gemahlene Kohle. Gleichzeitig beinhalten diese Materialien unterschiedlichste Inhaltsstoffe und Feuchtegehalte, und die Korngrößenverteilung erstreckt sich über ein weites Kornband. Dies führt dazu, dass insbesondere große, schwere und unregelmäßig geformte Partikel vor ihrer vollständigen Umsetzung auf das Klinkerbett fallen und dort chemische Reaktionen mit dem Aufgabestoff auslösen. Insbesondere kommt es im Klinkerbett zu einer Reduktion von Fe₂O₃ zu FeO, die wiederum in der Verfärbung des Klinkers und in einer verminderten Klinkerqualität resultiert. Das schlechte Ausbrandverhalten verschiebt auch die Temperaturverteilung der Flamme vom Brennermund weg und verringert die damit erreichbaren Spitzentemperaturen, welche zum Brennen des Materials notwendig sind.

Es existieren diverse Ansätze, die Flugphase und den Umsatz des Ersatzbrennstoffs zu verbessern. Beispielsweise stellt die Verdrallung des Brennstoffs vor dem Austritt aus dem eigentlichen Brennstoffkanal ein Ansatz dar, um die Flugeigenschaften des Brennstoffs zu verbessern. Die Erhöhung der Transportluftmenge für den Ersatzbrennstoff bewirkt ebenfalls eine längere Flugphase des gesamten Brennstoffs, sorgt jedoch gleichzeitig dafür, dass der Brennstoff zu schnell aus dem heißen Brennernahbereich getragen wird. Zudem bewirken hohe Geschwindigkeiten in den Ersatzbrennstoffkanälen einen erhöhten Verschleiß und einen unerwünschten Kühleffekt, da die Transportluft üblicherweise Umgebungstemperatur besitzt.
In der WO 2012/054949 A1 wird eine Vorrichtung zum Fördern von pneumatisch geförderten Sekundärbrennstoffen, insbesondere für Drehrohröfen beschrieben, die ein zentrales Förderrohr umfasst, das am Brennermund eine Austrittsöffnung für die pneumatisch geförderten Brennstoffe in den Ofenraum aufweist. Weiterhin ist eine Gaszuleitung vorgesehen, die unmittelbar (in Strömungsrichtung gesehen) vor der Austrittsöffnung in einem die schräg nach vorne, also in Richtung der Austrittsöffnung, gerichteten Verlauf von unten in das Innere des Förderrohrs einmündet. Beim Betrieb dieser Vorrichtung wird Luft mit hoher Geschwindigkeit durch die Gaszuleitung in das Förderrohr eingetragen. Dort stößt der zugeführte Luftstrom auf den Strom des Sekundärbrennstoffs, wodurch die den Luftstrom passierenden Brennstoffpartikel einen entsprechenden Impuls erfahren, der die Flugbahn der Brennstoffpartikel verändert: Die Brennstoffpartikel verlassen das Förderrohr nicht mehr parallel zur Förderachse, sondern werden schräg zur Förderachse ausgestoßen. Insbesondere gelingt so, die Flugbahn der Brennstoffpartikel dahingehend zu verändern, dass sie die Stützflamme der Primärbrennstoffe in einer Art schrägem Wurf durchdringen. Dadurch werden die Verweildauer in der Flamme sowie die Wurfweite erhöht. Dies bewirkt eine bessere Verbrennung der festen Brennstoffe und damit eine verbesserte Qualität des Prozesses.
Diese Vorrichtung hat sich bewährt, kann jedoch hinsichtlich der Effizienz der Verbrennung des Sekundärbrennstoffs noch verbessert werden, was zugleich die Aufgabe der vorliegenden Erfindung ist. Dokument EP2626659 A1 offenbart ein Verbrennungsverfahren bei dem Sekundärbrennstoff mittels eines sauerstoffreichen Gases verbrannt wird.

Gelöst ist diese Aufgabe durch ein Verfahren mit den Merkmalen des Patentanspruchs 1. Vorteilhafte Ausgestaltungen der Erfindung sind in den Unteransprüchen angegeben. Beim erfindungsgemäßen Verfahren werden also primärer Brennstoff und primäres Oxidationsmittel über beispielsweise koaxial zueinander angeordnete Ringkanäle oder ringförmig angeordnete Einzeldüsen in den Ofenraum eingetragen, in dem sie nach Zündung eine Flamme ausbilden. Wenigstens eine zusätzliche Förderleitung im Mehrstoffbrenner dient zum pneumatischen Zuführen eines - bevorzugt aus Festpartikeln bestehenden - Sekundärbrennstoffs. In diese Förderleitung mündet/münden im Bereich des Brennermundes, also am oder unmittelbar vor dem Austritt des Sekundärbrennstoffstroms in den Ofenraum, eine oder mehrere Gaszuleitungen von unten ein, durch die ein sauerstoffreiches Gas geführt wird. Die Gaszuleitung/en ist/sind bevorzugt mit ihrer/ihren in die Förderleitung einmündenden Endabschnitt/en schräg nach vorne angeordnet, sodass beim Auftreffen des Gasstroms auf den Sekundärbrennstoffstrom die Partikel des Sekundärbrennstoffs gleichzeitig mit einer nach oben und mit einer nach vorne gerichteten Impulskomponente beaufschlagt werden. Gleichzeitig dringt ein Teil des sauerstoffreichen Gases in den Sekundärbrennstoffstrom ein und durchmischt sich mit diesem. Ein anderer Teil des sauerstoffreichen Gases bildet unterhalb der Flugparabel des Sekundärbrennstoffs eine Zone sauerstoffreichen Gases aus, in die die Partikel des Sekundärbrennstoffs beim Durchlaufen ihrer Flugparabel zwangsläufig einsinken. Durch diese beiden Effekte erfolgt ein frühzeitiger und effizienter Beginn der Umsetzung des Sekundärbrennstoffs, noch während die Partikel des Sekundärbrennstoffstroms die Flugparabel durchlaufen. Aufgrund der Ablenkung des Sekundärbrennstoffstroms durch den eingetragenen sauerstoffreichen Gasstrom verlängern sich Flugbahn und Flugzeit des Sekundärbrennstoffs innerhalb des Ofenraums. Die Wahrscheinlichkeit, dass unvollständig verbrannte Partikel des festen Ersatzbrennstoffs mit dem Aufgabegut im Ofenraum in Kontakt kommen, wird dadurch erheblich reduziert. Zugleich kann der Anteil an Ersatzbrennstoffen im Energiemix des Mehrstoffbrenners deutlich erhöht und der Anteil an hochwertigen Primärbrennstoffen entsprechend reduziert werden, wodurch eine erhebliche Kosteneinsparung gegenüber einem Betrieb mit Mehrstoffbrennern nach dem Stande der Technik erzielt werden kann.

Wesentlich für die Erfindung ist insbesondere, dass der Sekundärbrennstoff beim Durchlaufen des Ofenraums möglichst lange einer möglichst sauerstoffreichen Atmosphäre ausgesetzt ist. Um dies zu erreichen, sieht eine bevorzugte Ausgestaltung der Erfindung vor, weiteres sauerstoffreiches Gas in einen Bereich des Ofenraums einzutragen, der beim Betrieb des Mehrstoffbrenners vom Sekundärbrennstoffstrom durchlaufen wird. Der Eintrag dieses zusätzlichen sauerstoffreichen Gases beispielsweise mittels einer Lanze oder mehrere Lanzen, die innerhalb und/oder unterhalb des Förderrohrs am Brennermund ausmündet/ ausmünden und/oder als separate Lanze/n in den Ofenraum einmündet/einmünden und die auf einen von dem aus dem Brennermund austretenden Strom der Sekundärbrennstoffteilchen durchlaufenen Bereich gerichtet ist/sind.

Als "sauerstoffreiches Gas" soll hier ein Gas mit einem Sauerstoffgehalt von mehr als 50 Vol.-% verstanden werden, bevorzugt mit einem Sauerstoffgehalt von mehr als 95 Vol.-%, besonders bevorzugt mit einem Sauerstoffgehalt von mehr als 99 Vol.-%. Das sauerstoffreiche Gas wird beispielsweise in Membrananlagen oder kryogenen Luftzerlegungsanlagen erzeugt und in einem Sauerstofftank am Standort des Mehrstoffbrenners gespeichert.

Durch den Einsatz von Sauerstoff anstelle von Luft wird insbesondere auch die Temperatur im Ofenraum, insbesondere im Bereich des Brennermundes erhöht. Die hohe Temperatur trägt zur effizienten Verbrennung auch solcher Sekundärbrennstoffe bei, die nur einen geringen Brennwert von beispielsweise unter 10 MJ/kg besitzen. Auf der anderen Seite führen Sekundärbrennstoffe mit vergleichsweise hohem Brennwert bei der Verbrennung mit reinem Sauerstoff zu derart hohen Temperaturen, dass das Brennergehäuse Schaden nehmen könnte. Um daher das erfindungsgemäße Verfahren auch bei einer Beschickung des Ofens mit unterschiedlichen Sekundärbrennstoffen und/oder im Falle sehr inhomogener Sekundärbrennstoffströmen zum Einsatz zu bringen ist es vorteilhaft, dass der Sauerstoffgehalt des sauerstoffreichen Gases in Abhängigkeit von gemessenen oder vorgegebenen Parametern des Verbrennungsvorgangs im Ofenraum regelbar ist. Beispielsweise wird ein Zielwert des Sauerstoffgehalts in Abhängigkeit vom eingesetzten Sekundärbrennstoff oder von der Temperatur oder einer gemessenen Abgaskonzentration im Ofenraum bestimmt. Durch Beimischen von Luft oder eines Inertgases in das sauerstoffreiche Gas wird anschließend der Sauerstoffgehalt des dem Sekundärbrennstoffstrom zugeführten Gasstroms entsprechend eingestellt.

Zur weiteren Förderung der Verbrennung und der Stabilisierung des Sekundärbrennstoffstroms im Ofenraum ist es vorteilhaft, den Sekundärbrennstoffstrom mit einer Drallluftströmung zu umhüllen, die gleichfalls aus einem sauerstoffreichen Gas besteht. Die Gaszuführungen für die Drallluft und für das zur Ablenkung eingesetzte sauerstoffreiche Gas können dabei an einer gemeinsamen Sauerstoffzuleitung angeschlossen sein, wobei in einer Variante der Erfindung die jeweiligen Sauerstoffgehalte unabhängig voneinander einstellbar sind. Dies gelingt beispielsweise dadurch, dass die jeweilige Gaszuleitung mit einer Sauerstoffzuleitung und einer Zuleitung für Luft ausgerüstet sind, die jeweils mit geeigneten, über eine Steuereinrichtung ansteuerbaren Ventilen ausgerüstet sind.

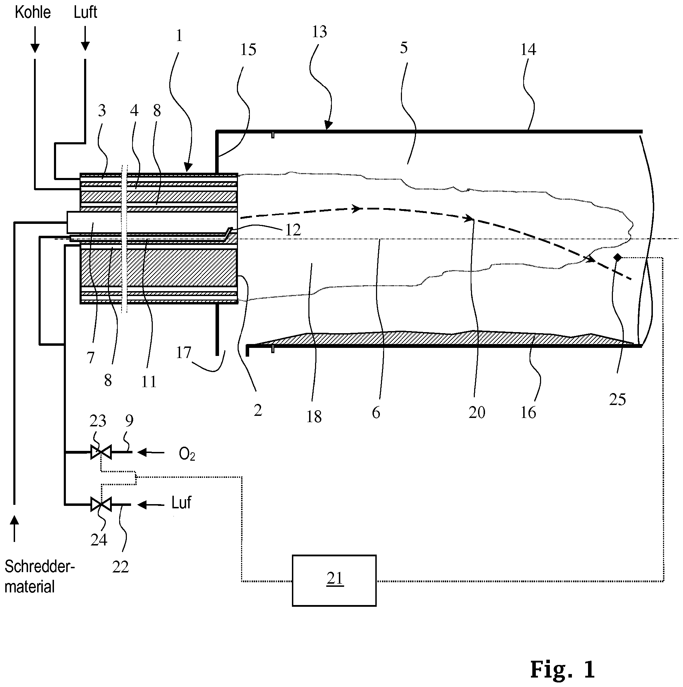

Anhand der Zeichnung wird ein Ausführungsbeispiel der Erfindung näher erläutert. Die einzige Zeichnung (Fig. 1) zeigt schematisch einen Drehrohrofen mit einem Mehrstoffbrenner im Längsschnitt. Das Ausführungsbeispiel nach Fig. 1 zeigt einen Mehrstoffbrenner 1, an dessen Brennermund 2 radial außenseitig ein Ringkanal 3 für die Zuführung von primärem Oxidationsmittel und radial innenseitig dazu ein Ringkanal 4 für die Zuführung eines primären Brennstoffs in einen Ofenraum 5 ausmündet. Beim primären Oxidationsmittel handelt es sich in der Regel um Luft oder um ein mit Sauerstoff angereichertes Gas mit einem Sauerstoffanteil von 22 Vol-% und darüber. Beim primären Brennstoff handelt es sich in der Regel um einen hochkalorischen Brennstoff wie Erdgas, Öl oder um einen pulversierten Festbrennstoff aus Kohle oder Petrolkoks, jedoch kommen auch andere Substanzen als primäre Brennstoffe in Betracht, beispielsweise Mischungen aus einem hochkalorischen und einem niederkalorischen Brennstoff. Des weiteren kann der Mehrstoffbrenner 1 hier nicht gezeigte Zuführungen aufweisen, die unterhalb der horizontalen Mittelebene 6 des Mehrstoffbrenners 1 angeordnet sind und der Zuführung weiterer gasförmiger, flüssiger oder fester sekundärer Brennstoffe dienen, wie beispielsweise Tiermehl, Lösungsmittel, Altöl, etc.

Oberhalb der horizontalen Mittelebene 6 des Mehrstoffbrenners 1 ist ein Förderohr 7 für einen sekundären Brennstoff angeordnet, insbesondere für einen sekundären Festbrennstoff, wie beispielsweise Kunststoff- Schreddermaterial, Reifenschnitzel, Altholz oder sonstige partikelförmige Abfallstoffe oder andere, in der Regel niederkalorische, Festbrennstoffe. Im hier gezeigten Ausführungsbeispiel befindet sich radial außenseitig zum Förderrohr 7 ein Ringkanal 8 für die Zuführung von Drallluft, die mit einer Zuleitung 9 für Sauerstoff strömungsverbunden ist. Im Übrigen sind die Ringkanäle 3, 4, und 8 sowie das Förderrohr 7 innerhalb des Mehrstoffbrenners 1 parallel zu dessen Längsachse angeordnet.

Innerhalb des Umfangs des Ringkanals 8 und unterhalb des Förderrohrs 7 verläuft ein Gaszuleitungsrohr 11, das im gezeigten Ausführungsbeispiel gleichfalls mit der Zuleitung 9 in Strömungsverbindung steht. Das Gaszuleitungsrohr 11 mündet unmittelbar vor dem Brennermund 2 von unten mit einem schräg nach oben, also in Richtung des Ofenraums 5 weisenden Endabschnitt 12 in das Förderrohr 7 ein. Der Endabschnitt 12 ermöglicht die Einleitung des durch das Gaszuleitungsrohr 11 strömenden Gases in das Förderrohr mit einem schräg nach oben und zum Ofenraum 5 hin gerichteten Impuls. Der Endabschnitt 12 mündet beispielsweise als eine schlitzförmige, sich im unteren Bereich des Förderrohrs 7 in dessen Umfangsrichtung erstreckende Durchbrechung in der Wand des Förderrohrs 7 ein, oder der Endabschnitt 12 umfasst eine Mehrzahl von in das Förderrohr 7 einmündenden Gasaustrittsdüsen mit oder ohne einem sich verengenden Strömungsquerschnitt. Weiterhin kann der Endabschnitt 12 bündig mit der Innenwand des Förderrohrs 7 enden oder, als zusätzliches ablenkendes Strömungshindernis, in das Innere des Förderrohrs 7 hineinragen.

Fig. 1 zeigt den Mehrstoffbrenner 1 in seinem Einbauzustand in einem Drehrohrofen 13, beispielsweise einem Drehrohrofen zum Herstellen von Zement. Der Ofenraum 5 des nur ausschnittsweise dargestellten Drehrohrofens 13 umfasst eine drehbar gelagerte Trommel 14, an deren Stirnseite 15 der Mehrstoffbrenner 1 eingebaut ist. Beim Betrieb des Drehrohrofens 13 wird die Trommel 14 mit Aufgabegut 16 beschickt. Im Anschluss an die thermische Behandlung im Drehrohrofen 13 wird das Aufgabegut 16 über eine Ausgabeöffnung 17 abgeführt. Über den Ringkanal 3 des Mehrstoffbrenners 1 wird das primäre Oxidationsmittel und über den Ringkanal 4 der primäre Brennstoff in den Ofenraum 5 eingebracht und bildet dort, nach Zündung, eine Flamme 18 aus. Über hier nicht gezeigte Zuführungen außerhalb des Mehrstoffbrenners 1 wird ein weiteres Oxidationsmittel, die meist als "Sekundärluft" bezeichnet wird und bei der Klinkererzeugung den größten Teil des insgesamt eingesetzten Oxidationsmittels ausmacht, in den Ofenraum 5 eingetragen. Gleichzeitig mit dem Eindüsen des primären Oxidationsmittels und des primären Brennstoffs wird über das Förderrohr 7 ein sekundärer Festbrennstoff, beispielsweise Kunststoff-Schreddermaterial, pneumatisch in den Ofenraum 5 eingetragen; gegebenenfalls werden über hier nicht gezeigte Zuführungen weitere sekundäre Brennstoffe eingetragen.

Gleichzeitig mit dem Sekundärbrennstoffstrom wird über die Gaszuleitung 11 ein sauerstoffreiches Gas in das Förderrohr 7 eingetragen. Der Impuls des Gasstromes führt zu einer Ablenkung des Sekundärbrennstoffstroms nach oben. Fig. 1 zeigt eine typische Flugbahn 20 eines aus dem Förderrohr 7 ausgestoßenen Partikels. Man erkennt eine Flugparabel, die an ihrem Beginn in der Nähe des Brennermundes 2 nicht parallel zur Längsachse des Mehrstoffbrenners 1 verläuft, sondern nach oben gerichtet ist. Dadurch wird die Flugzeit eines Sekundärbrennstoffpartikels und damit die Aufenthaltszeit des Partikels innerhalb der Flamme 18 deutlich erhöht. Beispielsweise verlängert sich die Flugzeit eines Partikels gegenüber einem horizontalen Ausstoß aus dem Brennermund bei sonst gleichem Impulsbetrag von ca. 0,6s auf 1s bis 1,5s. Zugleich durchmischt sich der aus der Gaszuleitung 11 ausgestoßene Gasstrom zumindest teilweise mit dem Sekundärbrennstoffstrom im Ofenraum 5 und führt zu einer frühzeitigen Umsetzung des Sekundärbrennstoffs.

Zusätzlich zum Eintrag von sauerstoffreichem Gas über die Gaszuleitung 11 kann ein sauerstoffreicher Drallluftstrom über den Ringkanal 8 eingetragen werden. Der sauerstoffreiche Drallluftstrom stabilisiert den Sekundärbrennstoffstrom im Ofenraum 5 zusätzlich und fördert zugleich dessen rasche Verbrennung. Weiterhin kann, hier nicht gezeigt, ergänzend oder anstelle des Drallluftstroms zusätzliches sauerstoffreiches Gas beispielsweise mittels Lanzen in den Ofenraum 5 eingetragen werden, um eine von den Partikeln des Sekundärbrennstoffs durchlaufenen Zone innerhalb des Ofenraums 5 mit Sauerstoff anzureichern.

Mittels einer Regeleinrichtung 21 kann der Sauerstoffgehalt des der Gaszuleitung 11 und/oder des dem Ringkanal 8 zugeführten Gasstroms geregelt werden. Dazu ist die Sauerstoffzuleitung 9 mit einer Gaszuleitung 22 verbunden, über die Luft oder ein Inertgas beigemischt werden kann. Über Ventile 23, 24 kann das Mischungsverhältnis von Sauerstoff und Luft bzw. Inertgas eingestellt und an bestimmte Parameter des Verbrennungsprozesses angepasst werden, beispielsweise an den Brennwert des eingesetzten Sekundärbrennstoffs und/oder an die Temperatur oder die Konzentration eines Schadstoffes im Abgas, die dabei durch geeignete Sensoren 25 erfasst werden.

Im hier gezeigten Ausführungsbeispiel wird der Sauerstoffgehalt in der Gaszuleitung 11 und im Ringkanal 8 einheitlich geregelt; es ist im Rahmen der Erfindung jedoch auch vorstellbar, für die Gaszuleitung 11 und den Ringkanal 8 separate Einrichtung zur Einstellung des Sauerstoffgehalts vorzusehen.

### Bezugszeichenliste

- 1.: Mehrstoffbrenner
- 2.: Brennermund
- 3.: Ringkanal
- 4.: Ringkanal
- 5.: Ofenraum
- 6.: horizontale Mittelebene
- 7.: Förderrohr
- 8.: Ringkanal
- 9.: Zuführung (für Sauerstoff)
- 10.: -
- 11.: Gaszuleitungsrohr
- 12.: Endabschnitt
- 13.: Drehrohrofen
- 14.: Trommel
- 15.: Stirnseite
- 16.: Aufgabegut
- 17.: Ausgabeöffnung
- 18.: Flamme
- 19.: -
- 20.: Flugbahn
- 21.: Regeleinrichtung
- 22.: Gaszuleitung
- 23.: Ventil
- 24.: Ventil
- 25.: Sensor

## Patentansprüche

1. Verfahren zum Beheizen eines Ofenraums, bei dem mittels eines Mehrstoffbrenners (1) ein primärer Brennstoff und ein primäres Oxidationsmittel sowie wenigstens ein aus Festpartikeln bestehender Sekundärbrennstoffstrom in einen Ofenraum (5) eingetragen werden, wobei der Sekundärbrennstoffstrom pneumatisch durch ein Förderrohr (7) des Mehrstoffbrenners geführt und im Bereich des dem Ofenraum (5) zugewandten Brennermundes (2) des Mehrstoffbrenners (1) durch Einleiten eines in einen unteren Bereich des Förderrohrs (7) eingetragenen Gasstroms abgelenkt wird,
**dadurch gekennzeichnet,**
**dass** der in das Förderrohr (7) eingetragene Gasstrom aus einem sauerstoffreichen Gas mit einem Sauerstoffanteil von über 50 Vol.-% besteht, das sich mit dem Sekundärbrennstoffstrom zumindest weitgehend vermischt und wobei sauerstoffreiches Gas mittels Lanzen in einen vom Sekundärbrennstoff durchlaufenen Bereich des Ofenraums (5) eingetragen wird.

2. Verfahren nach Anspruch 1, **dadurch gekennzeichnet, dass** als sauerstoffreiches Gas ein Gas mit über 95 Vol.-% Sauerstoff zum Einsatz kommt.

3. Verfahren nach Anspruch 1 oder 2, **dadurch gekennzeichnet, dass** der Sauerstoffgehalt des sauerstoffreichen Gases in Abhängigkeit von gemessenen Parametern des Verbrennungsvorgangs im Ofenraum (5) geregelt wird.

4. Verfahren nach einem der vorhergehenden Ansprüche, **dadurch gekennzeichnet, dass** radial außenseitig zum Sekundärbrennstoffstrom ein Drallluftstrom aus einem sauerstoffreichen Gas in den Ofenraum (5) eingetragen wird.

## Claims

1. Method for heating a furnace chamber, in which a primary fuel and a primary oxidizing agent and also at least one secondary fuel stream consisting of solid particles are introduced into a furnace chamber (5) by means of a multi-fuel burner (1), wherein the secondary fuel stream is conducted pneumatically through a feed tube (7) of the multi-fuel burner and, in the region of the burner mouth (2) of the multi-fuel burner (2), which mouth faces the furnace chamber (5), is diverted by guiding in a gas stream introduced into a lower region of the feed tube (7),
**characterized**
**in that** the gas stream introduced into the feed tube (7) consists of an oxygen-rich gas which has an oxygen fraction of over 50 vol% and which at least largely mixes with the secondary fuel stream, and wherein oxygen-rich gas is introduced by means of lances into a region of the furnace chamber (5) through which the secondary fuel passes.

2. Method according to Claim 1, **characterized in that**, as an oxygen-rich gas, use is made of a gas with over 95 vol% oxygen.

3. Method according to Claim 1 or 2, **characterized in that** the oxygen content of the oxygen-rich gas is regulated in a manner dependent on measured parameters of the combustion process in the furnace chamber (5).

4. Method according to one of the preceding claims,
**characterized in that**, radially outside the secondary fuel stream, a swirling air stream composed of an oxygen-rich gas is introduced into the furnace chamber (5).

## Revendications

1. Procédé de chauffage de la chambre d'un four dans lequel un combustible primaire et un agent d'oxydation primaire ainsi qu'au moins un écoulement de combustible secondaire constitué de fines particules sont introduits dans la chambre (5) du four au moyen d'un brûleur (1) à plusieurs matières,
l'écoulement de combustible secondaire étant introduit pneumatiquement par un tube de transport (7) du brûleur à plusieurs matières et étant dévié au niveau de la bouche (2) du brûleur (1) à plusieurs matières tournée vers la chambre (5) du four, par l'introduction d'un écoulement de gaz introduit dans une partie inférieure du tube de transport (7), **caractérisé en ce que**
l'écoulement de gaz introduit dans le tube de transport (7) est constitué d'un gaz enrichi en oxygène dont la teneur en oxygène est supérieure à 50 % en volume, qui se mélange au moins largement avec l'écoulement de combustible secondaire, le gaz enrichi en oxygène étant introduit dans une partie de la chambre (5) du four traversée par le combustible secondaire.

2. Procédé selon la revendication 1, **caractérisé en ce que** comme gaz enrichi en oxygène, on utilise un gaz contenant plus de 95 % en volume d'oxygène.

3. Procédé selon les revendications 1 ou 2, **caractérisé en ce que** la teneur en oxygène du gaz enrichi en oxygène est régulée en fonction de paramètre mesurés de l'opération de combustion dans la chambre (5) du four.

4. Procédé selon l'une des revendications précédentes, **caractérisé en ce qu'**un écoulement d'air de tourbillonnage constitué d'un gaz enrichi en oxygène est introduit dans la chambre (5) du four radialement à l'extérieur de l'écoulement de combustible secondaire.
